(19) **Europäisches Patentamt / European Patent Office / Office européen des brevets**

(11) **EP 1 751 494 B1**

(12) **FASCICULE DE BREVET EUROPEEN**

(45) Date de publication et mention
de la délivrance du brevet:
**17.03.2010 Bulletin 2010/11**

(51) Int Cl.:
***G01B 17/02*** *(2006.01)*

(21) Numéro de dépôt: **05773262.0**

(22) Date de dépôt: **19.05.2005**

(86) Numéro de dépôt international:
**PCT/FR2005/001257**

(87) Numéro de publication internationale:
**WO 2006/000668 (05.01.2006 Gazette 2006/01)**

(54) **DISPOSITIF ET PROCÉDÉ DE CARACTÉRISATION DIMENSIONNELLE D'UN OBJET CYLINDRIQUE.**

VORRICHTUNG UND VERFAHREN ZUR DIMENSIONALEN CHARAKTERISIERUNG EINES ZYLINDERFÖRMIGEN GEGENSTANDES

DEVICE AND METHOD FOR THE DIMENSIONAL CHARACTERISATION OF A CYLINDRICAL OBJECT

(84) Etats contractants désignés:
**AT BE BG CH CY CZ DE DK EE ES FI FR GB GR HU IE IS IT LI LT LU MC NL PL PT RO SE SI SK TR**

(30) Priorité: **26.05.2004 FR 0405694**

(43) Date de publication de la demande:
**14.02.2007 Bulletin 2007/07**

(73) Titulaire: **Socomate International
77580 Crecy La Chapelle (FR)**

(72) Inventeur: **COPERET, Philippe
F-77100 Meaux (FR)**

(74) Mandataire: **Burbaud, Eric
Cabinet Plasseraud
52 rue de la Victoire
75440 Paris Cedex 09 (FR)**

(56) Documents cités:
**EP-A- 0 304 053     FR-A- 2 833 706**

• **PATENT ABSTRACTS OF JAPAN vol. 1997, no. 11, 28 novembre 1997 (1997-11-28) -& JP 09 184827 A (MITSUBISHI HEAVY IND LTD), 15 juillet 1997 (1997-07-15)**

**Description**

La présente invention est relative aux dispositifs et aux procédés de caractérisation dimensionnelle d'objets comportant une surface sensiblement cylindrique de révolution, tels que des barres ou des tubes. La présente invention est également relative à un programme d'ordinateur pour la mise en oeuvre d'un procédé de caractérisation dimensionnelle d'un tel objet.

On connaît déjà, notamment par exemple par les documents FR 2 234 545 et US 6 634 233, de tels dispositifs comprenant deux sondes émettant et recueillant des ondes ultrasonores. Ces ondes ultrasonores sont émises sous forme impulsionnelle par les sondes, sont propagées par un milieu approprié et sont réfléchies par une surface interne ou externe de l'objet étudié. Ces ondes réfléchies reviennent ensuite à un capteur qui génère alors un signal à partir duquel est mesuré un temps de vol des ondes dans le milieu entre leur émission et leur réception après réflexion. Ce temps de vol, connaissant la vitesse de propagation des ondes dans le milieu, permet de calculer la position des points de réflexion.

Le document EP 0304054 décrit aussi un tel dispositif.

De tels dispositifs sont généralement utilisés pour mesurer les diamètres interne et externe d'un tube et/ou l'épaisseur de la paroi d'un tel tube.

La présente invention est definie par un dispositif selon la revendication 1, un procédé selon la revendication 6 et respectivement par un programme d'ordinateur selon la revendication 11.

Selon un aspect de la présente invention, celle-ci concerne un dispositif de caractérisation dimensionnelle d'un objet comportant une surface sensiblement cylindrique de révolution autour d'un axe longitudinal. Ce dispositif comprend au moins un émetteur pour émettre au moins deux ondes impulsionnelles. Par exemple, chacune de ces ondes impulsionnelles est une onde acoustique. En pratique, le dispositif selon l'invention peut comprendre une sonde, constituée par exemple d'un cristal piézoélectrique, formant à la fois un émetteur et un récepteur. Ainsi, chaque onde impulsionnelle peut être émise par un émetteur distinct ou par un même émetteur tournant d'un certain angle autour de l'axe longitudinal, entre les émissions successives de deux ondes impulsionnelles. Chaque émission est effectuée dans un milieu adapté pour propager ces ondes chacune respectivement vers un point de mesure distinct de la surface cylindrique. L'expression "point de mesure" désigne dans la présente demande une zone de l'objet, placée sur sa surface interne ou sa surface externe, qui reçoit et réfléchit les ondes impulsionnelles. Cette zone n'est pas nécessairement ponctuelle. Le dispositif selon l'invention comporte également au moins un récepteur pour recueillir les ondes réfléchies, par la surface cylindrique, au niveau de chacun des points de mesure. De plus, le dispositif selon l'invention comporte des premiers moyens de calcul pour déterminer la position de chacun des points de mesure, à partir du temps de vol des ondes impulsionnelles sur un trajet comprenant un aller et un retour. L'aller s'effectue entre chaque émetteur et le point de mesure correspondant. Le retour s'effectue entre ce point de mesure et un récepteur. Le dispositif selon l'invention comporte en outre des seconds moyens de calcul, qui peuvent être les mêmes que les premiers moyens de calcul. Ces seconds moyens de calcul permettent de reconstruire une portion de la surface ou de la paroi cylindrique sur laquelle se trouve chacun des points de mesure, par exemple sous la forme d'une courbe caractéristique de cette surface. Les seconds moyens de calcul déterminent cette courbe caractéristique sur 360 degrés autour de l'axe longitudinal, en passant par chacun des points de mesure, par interpolation à partir de la position correspondante de chacun de ces points. Cette courbe caractéristique représente par exemple le diamètre externe d'une barre ou d'un tube, le diamètre interne d'un tube ou l'épaisseur d'une paroi de tube, sous sa surface externe, ou bien encore une ovalisation ou une excentration d'une barre ou d'un tube.

Un tel dispositif selon l'invention permet de déterminer des courbes représentatives du développé d'une caractéristique dimensionnelle d'objets cylindriques, à partir d'un minimum de points de mesure.

Dans des modes de réalisation de l'invention, on peut éventuellement avoir recours en outre à l'une et/ou à l'autre des dispositions suivantes :

- chaque émetteur et chaque récepteur sont fixes par rapport à l'objet qui, lui, se déplace sensiblement parallèlement à l'axe longitudinal ; on peut ainsi réaliser un contrôle des objets en continu, sans aucune rotation ; ceci évite d'avoir à mettre en oeuvre un double mouvement simultané de rotation et de translation, comme dans certains dispositifs de l'art antérieur dans lesquels ce double mouvement est obtenu par l'intermédiaire de galets d'entraînement de l'objet, inclinés, qui ne permettent pas d'obtenir de grandes vitesses de défilement de cet objet, vitesses qui ne sont pas par ailleurs parfaitement contrôlées du fait de glissements engendrés entre les galets et l'objet ;
- chaque émetteur est également récepteur ; et
- le dispositif comporte au moins quatre émetteurs et quatre récepteurs, répartis autour de l'objet, de manière sensiblement symétrique autour de l'axe longitudinal, pour déterminer la position d'au moins quatre points de mesure ; on dispose ainsi par exemple six sondes, formant chacune à la fois un émetteur et un récepteur, à 60 degrés l'une de l'autre, autour de l'axe longitudinal.

Selon un autre aspect, l'invention concerne un procédé de caractérisation dimensionnelle d'un objet comportant une surface sensiblement cylindrique de révolution autour d'un axe longitudinal, tel qu'une barre ou un tube, comprenant :

- l'émission d'au moins deux ondes impulsionnelles, dans un milieu adapté pour propager ces ondes, chacune respectivement vers un point de mesure distinct de la surface cylindrique,
- la détection d'ondes impulsionnelles réfléchies, par la surface cylindrique, au niveau de chacun des points de mesure, et
- la calcul de la position de chacun des points de mesure, à partir du temps de vol des ondes impulsionnelles sur un trajet comprenant un aller entre chaque émetteur et le point de mesure correspondant et un retour entre ce point de mesure et un récepteur,

caractérisé par le fait que, qu'il comporte en outre une opération consistant à calculer une courbe caractéristique de la surface cylindrique, sur 360 degrés autour de l'axe longitudinal et passant par chacun des points de mesure, par interpolation à partir de la position correspondante de chacun de ces points.

Selon des modes de mise en oeuvre de ce procédé, on peut éventuellement avoir recours en outre à l'une et/ou à l'autre des dispositions suivantes :

- on déplace l'objet sensiblement parallèlement à l'axe longitudinal ;
- la courbe caractéristique est calculée à partir de la position d'au moins quatre points de mesure ;

Selon l'invention la courbe caractérisitique correspond:

- soit à une courbe d'épaisseur donnée par :

$$\text{Ep} = [\text{Ep}_F \cdot \sin(2\pi t + \varphi_F)] + [\text{Ep}_{2F} \cdot \sin(4\pi t + \varphi_{2F})] + \text{Ep}_{moy}$$

où

-- $\text{Ep}_F$ est l'amplitude de la variation de l'épaisseur calculée pour une excentration de l'objet par rapport à l'axe longitudinal,
-- $\varphi_F$ est la phase de la variation de l'épaisseur calculée pour une excentration de l'objet par rapport à l'axe longitudinal,
-- $\text{Ep}_{2F}$ est l'amplitude de la variation de l'épaisseur calculée pour une ovalisation de l'objet,
-- $\varphi_{2F}$ est la phase de la variation de l'épaisseur calculée pour une ovalisation de l'objet,
-- $\text{Ep}_{moy}$ est la valeur moyenne de l'épaisseur calculée sur l'ensemble des points de mesure,
-- $t$ est la période d'échantillonnage de la courbe interpolée ;

- soit au diamètre externe et est donnée par :

$$\varnothing\text{ext} = [\varnothing\text{Ext}_{2F} \cdot \sin(4\pi t + \varphi\text{Ext}_{2F})] + \varnothing_{moy}$$

où

-- $\varnothing\text{Ext}_{2F}$ est l'amplitude de la variation calculée pour le diamètre externe de l'objet,
-- $\varphi\text{Ext}_{2F}$ est la phase de la variation calculée pour le diamètre externe de l'objet,
-- $\varnothing_{moy}$ est la valeur moyenne du diamètre calculé sur l'ensemble des points de mesure,
-- $t$ est la période d'échantillonnage de la courbe interpolée ;

- soit à l'amplitude et à la phase de l'ovalisation du diamètre interne et est donnée par :

$$\text{Module}(\text{Ov}_{int}) = \sqrt{([\text{Sin}(\text{Ov}_{int})]^2 + (\text{Cos}(\text{Ov}_{int}))^2)} = \varnothing\text{Int}_{2F}$$

$$\text{Phase}(Ov_{int}) = Atg[Sin(Ov_{int})/Cos(Ov_{int})] = \varphi Int_{2F}$$

où

$$Sin(Ov_{int}) = (\Sigma EpInt_i \cdot sin2F_i)/(n/2)$$

$$Cos(Ov_{int}) = (\Sigma EpInt_i \cdot cos2F_i)/(n/2)$$

avec :

-- $EpInt_i = ep_i - (\varnothing_i - \varnothing_{moy})$,
-- $\varnothing_{moy}$ : la valeur moyenne du diamètre calculé sur l'ensemble des points de mesure,
-- $\varnothing_i$ : est une valeur d'échantillonnage du diamètre externe,
-- $2F_i$ est la fréquence d'ovalisation,
-- n égal au nombre de points de mesure ;

- l'émission des ondes impulsionnelles est simultanée à partir d'un ensemble d'émetteurs sensiblement également répartis angulairement autour de l'axe longitudinal ;
- L'émission des ondes impulsionnelles est réalisée séquentiellement sur un ensemble d'émetteurs sensiblement également répartis angulairement autour de l'axe longitudinal.
  Selon encore un autre aspect, l'invention concerne un programme d'ordinateur pour la mise en oeuvre d'un procédé de caractérisation dimensionnelle d'un objet comportant une surface cylindrique symétrique autour d'un axe longitudinal, tel qu'une barre ou un tube, ce programme comprenant les instructions pour
- déclencher l'émission d'au moins deux ondes impulsionnelles par au moins un émetteur,
- calculer la position d'au moins deux points de mesure, à partir de données recueillies par au moins un récepteur et correspondant à une onde impulsionnelle réfléchie par la surface cylindrique, et
- calculer une courbe caractéristique de la surface cylindrique, sur 360 degrés autour de l'axe longitudinal et passant par chacun des points de mesure, par interpolation à partir de la position correspondante de chacun de ces points.

Dans des modes de réalisation de ce programme la courbe caractéristique est calculée à partir de la position d'au moins quatre points de mesure. Selon l'invention la courbe caractéristique correspond:

- soit à une courbe d'épaisseur donnée par :

$$Ep = [Ep_F \cdot sin(2\pi t + \varphi_F)] + [Ep_{2F} \cdot sin(4\pi t + \varphi_{2F})] + Ep_{moy}$$

où

-- $Ep_F$ est l'amplitude de la variation de l'épaisseur calculée pour une excentration de l'objet par rapport à l'axe longitudinal,
-- $\varphi_F$ est la phase de la variation de l'épaisseur calculée pour une excentration de l'objet par rapport à l'axe longitudinal,
-- $Ep_{2F}$ est l'amplitude de la variation de l'épaisseur calculée pour une ovalisation de l'objet,
-- $\varphi_{2F}$ est la phase de la variation de l'épaisseur calculée pour une ovalisation de l'objet,
-- $Ep_{moy}$ est la valeur moyenne de l'épaisseur calculée sur l'ensemble des points de mesure,
-- t est la période d'échantillonnage de la courbe interpolée ;

- soit au diamètre externe et est donnée par :

$$\text{Øext} = [\text{ØExt}_{2F} \cdot \sin(4\pi t + \varphi \text{Ext}_{2F})] + \text{Ø}_{moy}$$

où

-- $\text{ØExt}_{2F}$ est l'amplitude de la variation calculée pour le diamètre externe de l'objet,
-- $\varphi \text{Ext}_{2F}$ est la phase de la variation calculée pour le diamètre externe de l'objet,
-- $\text{Ø}_{moy}$ est la valeur moyenne du diamètre calculé sur l'ensemble des points de mesure,
-- $t$ est la période d'échantillonnage de la courbe interpolée ;

- soit à l'amplitude et à la phase de l'ovalisation du diamètre interne et est donnée par :

$$\text{Module}(Ov_{int}) = \sqrt{([Sin(Ov_{int})]^2 + (Cos(Ov_{int})]^2)} = \text{ØInt}_{2F}$$

$$\text{Phase}(Ov_{int}) = \text{Atg}[Sin(Ov_{int})/Cos(Ov_{int})] = \varphi \text{Int}_{2F}$$

où

$$Sin(Ov_{int}) = (\Sigma Eplnt_i \cdot \sin 2F_i)/(n/2)$$

$$Cos(Ov_{int}) = (\Sigma Eplnt_i \cdot \cos 2F_i)/(n/2)$$

avec :

-- $Eplnt_i = ep_i - (\text{Ø}_i - \text{Ø}_{moy})$,
-- $\text{Ø}_{moy}$ : la valeur moyenne du diamètre calculé sur l'ensemble des points de mesure,
-- $\text{Ø}_i$ : est une valeur d'échantillonnage du diamètre externe,
-- $2F_i$ est la fréquence d'ovalisation,
-- $n$ égal au nombre de points de mesure.

D'autres aspects, buts et avantages de l'invention apparaîtront à la lecture de la description d'un de ses modes de réalisation.
L'invention sera également mieux comprise à l'aide des dessins, sur lesquels :

- la figure 1 représente schématiquement un exemple de dispositif conforme à la présente invention ;
- la figure 2 représente schématiquement une cellule de mesure constitutive du dispositif de la figure 1 ;
- la figure 3 est un diagramme fonctionnel des moyens d'excitation et de calcul constitutifs du dispositif de la figure 1 ;
- la figure 4 représente un exemple de courbe interpolée correspondant à la variation d'épaisseur, sur 360 degrés, d'un tube ;
- la figure 5 correspond à l'analyse spectrale de la courbe représentée sur la figure 4.

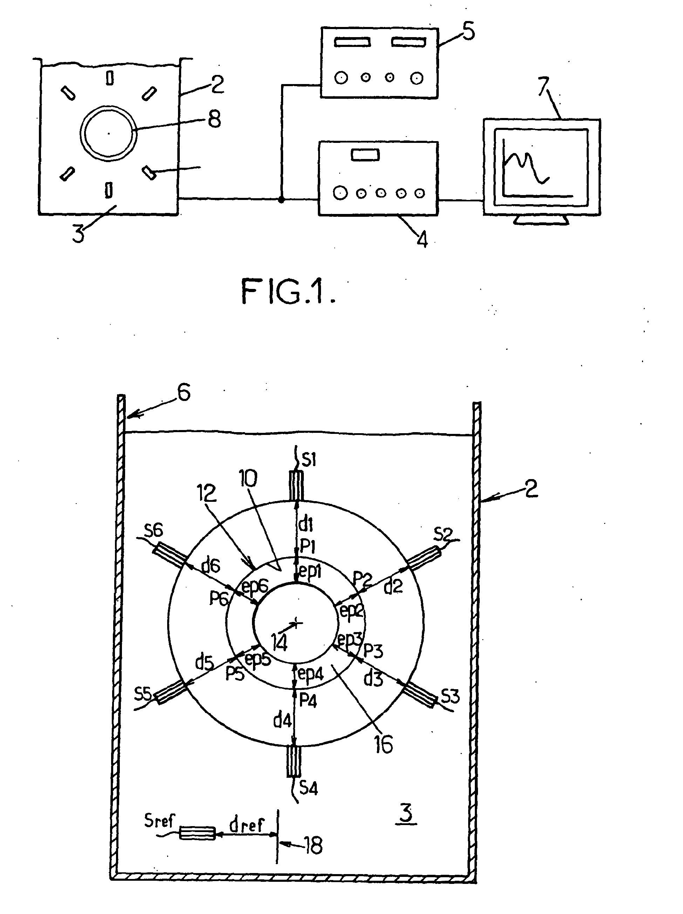

Sur les différentes figures, les mêmes références désignent des éléments identiques ou similaires.
Un exemple de réalisation d'un dispositif 1 est représenté sur la figure 1. Selon cet exemple, le dispositif 1 met en oeuvre des ultrasons et permet de mesurer des distances à partir de temps de vol de ces ultrasons. Ce dispositif 1 comporte une cellule de mesure 2, des moyens de calcul 4, des moyens d'excitation 5 et des moyens de visualisation 7. La cellule de mesure 2 est remplie d'un milieu 3 adapté pour propager des ondes ultrasonores.
Comme représenté sur la figure 2, la cellule de mesure comporte une cuve 6 communément appelée "boîte à eau" par l'Homme du Métier. Dans cette cuve 6 est immergé un tube 8. Le tube 8 constitue ici l'objet que l'on cherche à caractériser dimensionnellement. Le tube 8 comporte des surfaces interne 10 et externe 12 sensiblement cylindriques de révolution autour d'un axe longitudinal 14.

Six sondes Si avec i = 1 à 6 sont disposées de manière sensiblement symétrique autour de l'axe longitudinal 14. Plus précisément, les six sondes Si sont disposées uniformément par pas de 60 degrés autour du tube 8 afin de permettre un échantillonnage à angle constant des épaisseurs Epi avec i = 1 à 6 et des distances di avec i = 1 à 6.

Les épaisseurs Epi représentent les épaisseurs de la paroi 16 du tube 8 en six points de mesure Pi avec i = 1 à 6, distincts. Chacune des distances di représentent la distance entre la sonde Si et le point de mesure Pi correspondant.

Chaque sonde Si est à la fois un émetteur adapté pour émettre une onde ultrasonore impulsionnelle et un récepteur adapté pour détecter des ondes ultrasonores propagées par le milieu 3. Il s'agit par exemple d'éléments piézoélectriques.

La précision du positionnement de chacune des sondes Si n'est pas critique. En effet, d'une part, les différences de distance par rapport à l'axe longitudinal 14 peuvent être facilement corrigées à l'aide des moyens de calcul 4 et, d'autre part, la position angulaire de chaque sonde Si doit simplement être suffisante pour permettre une précision de 0,1 % sur l'épaisseur nominale, ce qui dans la pratique autorise sans aucun problème une erreur de positionnement de l'ordre de 1 degré.

La cellule de mesure 2 comporte également une sonde Sref pour mesurer la distance dref d'un réflecteur fixe 18 à cette sonde Sref afin de permettre aux moyens de calcul 4 de prendre en compte la vitesse réelle de propagation des ultrasons dans le milieu 3 pour compenser les mesures di effectuées par les sondes Si.

Des moyens de déplacement non représentés, tels qu'un convoyeur, entraînent le tube 8 parallèlement à l'axe longitudinal 14.

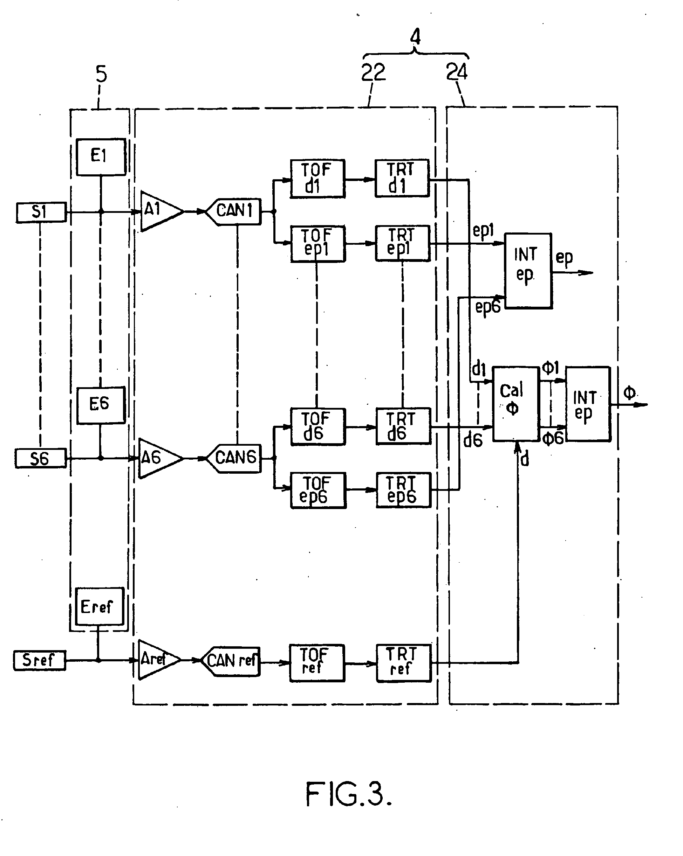

Comme représenté sur la figure 3, les sondes Si sont connectées d'une part aux moyens de calcul 4 et d'autre part aux moyens d'excitation 5.

Les moyens d'excitation 5 sont constitués d'émetteurs Ei avec i = 1 à 6 et Eref. Ces émetteurs Ei et Eref génèrent des signaux d'excitation des sondes Si. Ils sont avantageusement de bandes passantes nettement supérieures à celles des sondes Si, de façon à ne pas limiter le temps nécessaire pour atteindre le maximum de l'amplitude des ondes impulsionnelles de mesure et d'obtenir ainsi la meilleure précision possible. Les émetteurs Ei et Eref de ce type ont généralement des temps de commutation inférieurs à 5 nanosecondes, ce qui permet d'utiliser des sondes Si ayant des fréquences d'excitation pouvant aller jusqu'à 25 MHz. Ces fréquences d'excitation correspondent aux fréquences de vibration de l'élément constitutif des sondes Si.

Par ailleurs, chaque sonde Si génère un signal de mesure, en réponse à la réception d'une onde ultrasonore. Chaque signal de mesure est traité par les moyens de calcul 4.

Les moyens de calcul 4 comprennent des premiers moyens de calcul 22 et des seconds moyens de calcul 24.

Les premiers moyens de calcul 22 comportent essentiellement

- des amplificateurs analogiques Ai avec i = 1 à 6 et Aref,
- des convertisseurs analogiques-numériques CANi avec i = 1 à 6 et CANref,
- des intervalomètres TOFdi avec i = 1 à 6, TOFepi avec i = 1 à 6 et TOFref et
- des circuits de filtrage TRTdi avec i = 1 à 6, TRTepi avec i = 1 à 6 et TRTref.

Les amplificateurs analogiques Ai et Aref sont destinés à conditionner les signaux provenant des sondes Si pour les amener dans la dynamique d'entrée des convertisseurs CANi et CANref. Pour les raisons déjà exposées ci-dessus, les amplificateurs analogiques Ai et Aref ont une bande passante supérieure à celle des sondes Si.

Les convertisseurs CANi et CANref réalisent l'échantillonnage des signaux provenant des amplificateurs Ai et Aref, avec une résolution temporelle compatible avec la précision souhaitée. En effet, la précision sur la mesure de temps définit celle des courbes caractéristiques que sont les courbes d'épaisseur et de diamètre. En pratique, un échantillonnage compris entre 100 MHz et 200 MHz s'avère suffisant. En effet, les traitements numériques effectués postérieurement peuvent augmenter encore cette résolution si nécessaire.

Les intervalomètres TOFdi, TOFepi et TOFref mesurent les temps de propagation des ultrasons respectivement sur les distances di, epi et dref. Les temps correspondant aux distances di sont mesurés entre l'impulsion d'émission et l'écho de réflexion sur la surface externe 12 du tube 8. Ils correspondent donc à des temps de vol des ondes ultrasonores sur un trajet comprenant un aller entre chaque sonde Si et le point de mesure Pi, situé sur la surface externe 12 au droit de la sonde Si, et un retour entre ce point de mesure Pi et la sonde Si.

Les temps correspondant aux épaisseurs epi sont mesurés entre l'écho de réflexion sur la paroi externe 12 et l'écho de réflexion sur la paroi interne 10. Ceci correspond à une synchronisation sur l'écho dit d'entrée, c'est-à-dire sur la paroi externe 12. Ceci permet de s'affranchir de la position relative du tube 8 par rapport à la sonde Si.

Le temps correspondant à la distance dref est mesuré entre l'impulsion d'émission et l'écho de réflexion sur la surface externe du réflecteur fixe 18.

Les circuits TRTdi, TRTepi et TRTref reçoivent les mesures de temps brut effectuées par les circuits en amont, à la cadence des tirs des ondes ultrasonores. Cette cadence est par exemple de 5 kHz. Les circuits TRTdi, TRTepi et TRTref traitent les signaux qu'ils reçoivent, en temps réel, suivant des algorithmes de filtrage conventionnels dans le domaine des ultrasons, tels que le rejet de mesures aberrantes, le filtrage des variations trop rapides entre deux mesures consécutives et le moyennage glissant pour intégrer les mesures. Ces traitements ont pour but d'éliminer les mesures erronées qui ne correspondent pas à une réalité physique du procédé de fabrication du tube 8, de manière à transmettre aux seconds moyens de calcul 24, en aval, des données exemptes d'erreurs.

Les seconds moyens de calcul 24 comprennent un circuit de calcul de diamètre CALØ, et des circuits d'interpolation INTep et INTØ.

Le circuit CALØ calcule, à partir des mesures de distance di, les diamètres correspondants du tube 8. Pour ce faire, les mesures di sont d'abord corrigées par un coefficient déterminé par la mesure dref, afin de compenser les variations de vitesse de propagation des ultrasons dans le milieu 3.

Chaque diamètre Øi avec i = 1 à 6 est ensuite calculé par groupe de sondes diamétralement opposées, c'est-à-dire par paires S1-S4, S2-S5 et S3-S6.

Les circuits d'interpolation INTep et INTØ effectuent l'interpolation des courbes caractéristiques d'épaisseur et de diamètre, de façon à obtenir une résolution de 96 points par tour, soit un facteur d'interpolation de 16. Les circuits d'interpolation INTep, INTØ peuvent travailler dans le domaine spectral, ce qui permet d'obtenir directement les valeurs d'excentration et d'ovalisation du tube 8 à partir des six points de mesure Pi échantillonnés, sans avoir à calculer la courbe interpolée.

Dans le dispositif 1 décrit ci-dessus, le nombre n=6 de sondes Si a été choisi pour les raisons suivantes.

La période sur laquelle s'observe la totalité de la variation des distances di due à une excentration, correspond à une fois le tour du tube. Par contre, les variations de distance observées pour une ovalisation s'observent deux fois lorsque l'on effectue un tour de tube.

Donc, plutôt que d'effectuer une multitude de mesures autour du tube (par exemple de l'ordre de 100) pour obtenir une courbe représentative de la variation d'épaisseur (comme c'est le cas dans certains dispositifs de l'art antérieur), il suffit d'échantillonner cette courbe en respectant le critère de SHANNON et de calculer par interpolation les points manquants, pour construire la courbe complète. Rappelons que selon le critère de SHANNON, il faut que la fréquence d'échantillonnage soit au moins égale à deux fois la plus haute composante fréquentielle d'un signal. Si l'on ne respecte pas ce critère, on se retrouve en situation de sous échantillonnage qui peut conduire à l'apparition de fausses fréquences.

Ainsi, comme pour l'ovalisation on observe deux fois une variation pour un tour de tube, ceci impose, selon le critère de SHANNON, au moins quatre mesures par tour pour avoir un échantillonnage approprié. Le choix de six mesures permet d'obtenir une redondance qui rend l'interpolation plus fiable. Ainsi, certaines mesures aberrantes pourront être éliminées sans compromettre la précision de la reconstruction de la courbe caractéristique recherchée.

De même, ce choix de six sondes permet d'avoir un éloignement suffisant entre chaque sonde pour que toutes les mesures soient effectuées simultanément. Ainsi, il est possible d'augmenter la vitesse de contrôle du tube 8 d'un facteur 100 par rapport aux dispositifs de l'art antérieur qui doivent effectuer une centaine de mesures par tour pour reconstituer une courbe correcte. Cependant, une telle augmentation de la vitesse de contrôle n'étant pas toujours nécessaire, les mesures peuvent également être effectuées séquentiellement de façon à réduire le coût du matériel. En effet, il suffit de prévoir une électronique simplifiée qui, à la place de la redondance par six des éléments constitutifs des moyens de calcul 4 décrits ci-dessus, peut être réduite à un exemplaire traitant séquentiellement les signaux recueillis sur chacune des sondes Si. Ceci permet néanmoins de conserver une augmentation de la vitesse de contrôle considérable puisqu'elle est encore d'un facteur 15 avec six sondes (deux sondes en vis-à-vis doivent nécessairement effectuer leurs mesures simultanément pour le calcul du diamètre).

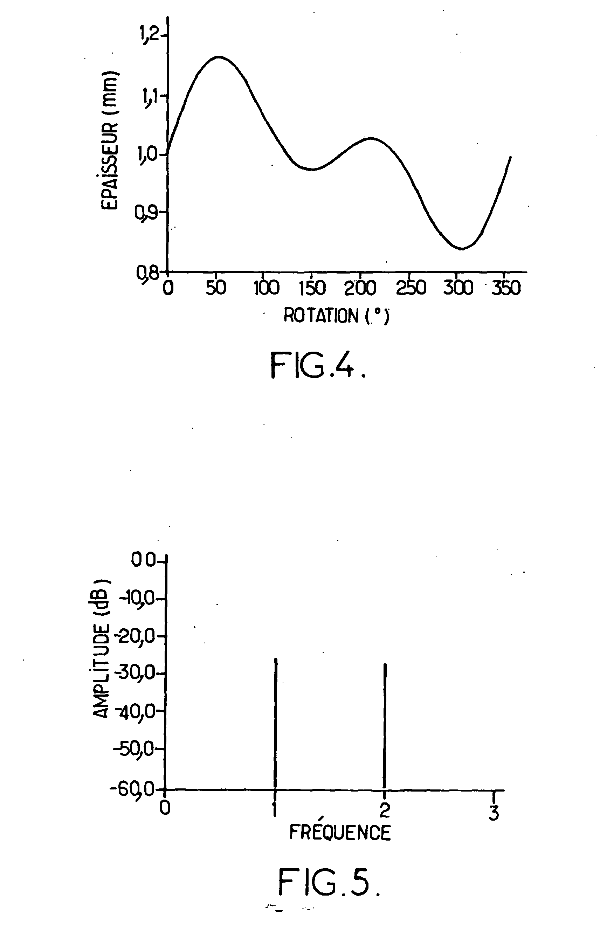

A partir de six mesures, pour reconstruire une courbe avec une centaine de points par tour, ce qui suffit pour obtenir une précision de 0,1% sur l'épaisseur nominale, le facteur d'interpolation est de 16. Un tel exemple de courbe est représenté sur la figure 4.

Si la cadence des tirs est de 5Khz, on dispose de 200 microsecondes pour réaliser l'opération d'interpolation. Des circuits DSP (acronyme de l'expression anglo-saxonne "Digital Signal Processing") peuvent être utilisés pour des seconds moyens de calcul 24 car ils effectuent sans problème ce type de calcul en 200 microsecondes.

L'interpolation peut être faite indifféremment dans le domaine temporel par filtrage ou dans le domaine spectral par transformée de Fourier et transformée de Fourier inverse. L'une ou l'autre de ces méthodes est choisie en fonction du facteur d'interpolation nécessaire.

En effet, on considère, en règle générale, qu'il est plus intéressant de réaliser l'opération d'interpolation dans le domaine temporel si le facteur d'interpolation est inférieur à 64 et qu'il vaut mieux la réaliser dans le domaine spectral s'il est supérieur à 64.

En effet, si le facteur d'interpolation est élevé, le nombre de coefficients pour la réalisation du filtre passe-bas nécessaire au filtrage de l'opération d'interpolation dans le domaine temporel, est important (par exemple, il est de 128 pour un facteur d'interpolation de 16 seulement). Dans ce cas, le calcul de la transformée de Fourier et ensuite de la transformée de Fourier inverse demande moins de ressources que le traitement par convolution dans le domaine temporel.

Par ailleurs, dans le domaine spectral, il est possible de séparer très facilement la réponse due à l'excentration de celle due à l'ovalisation (voir figure 5) par suppression de la raie spectrale correspondant au phénomène à éliminer, puisque nous savons que ces deux phénomènes répondent respectivement aux fréquences de 1Hz et 2Hz.

Ainsi, sans qu'il soit nécessaire de passer par la courbe interpolée, donc sans la transformée de Fourier inverse, il est possible de fournir l'épaisseur moyenne (raie continue), l'excentration (raie à 1Hz) et l'ovalisation (raie à 2Hz) d'un tube, à partir des points échantillonnés en respectant le critère de SHANNON.

Un exemple de mode de calcul de l'épaisseur d'un tube 8, et de ses diamètres interne et externe, est donné ci-dessous :

I - Epaisseur

1. Recherche de la phase et de l'amplitude de l'excentration :

- la première étape consiste à multiplier point à point les échantillons $ep_i$ acquis avec les échantillons sin $F_i$ d'une sinusoïde de période 2n et à faire la somme de ces multiplications pour obtenir le sinus de l'excentration (n=nombre d'échantillons $ep_i$).

$$Sin(Ex) = (\Sigma ep_i \cdot sinF_i)/(n/2)$$

- la deuxième étape consiste à multiplier points à points les échantillons acquis avec les échantillons $cosF_i$ de la même sinusoïde de période $2\pi$ mais déphasée de $\pi/2$ et à faire la somme de ces multiplications pour obtenir le cosinus de l'excentration.

$$Cos(Ex) = (\Sigma ep_i \cdot cosF_i)/(n/2)$$

Il ne reste alors qu'à calculer le module et la phase à partir des Sin(Ex) et Cos(Ex) ci-dessus, à savoir :

$$Module\ (Ex) = \sqrt{([Sin(Ex)]^2 + [Cos(Ex)]^2)} = Ep_F$$

$$Phase\ (Ex) = Atg[Sin(Ex)/Cos(Ex)] = \varphi_F$$

2. Recherche de la phase et de l'amplitude de l'ovalisation :

- le principe est le même; mais cette fois les échantillons $ep_i$ acquis sont multipliés avec les échantillons $sin2F_i$ et $cos2F_i$ obtenus à partir d'une sinusoïde de période $4\pi$ de même phase que la sinusoïde de période $2\pi$ précédente.
- nous obtenons ainsi avec n = nombre d'échantillons $ep_i$ :

$$Sin(Ov) = (\Sigma ep_i \cdot sin2F_i)/(n/2)$$

$$Cos(Ov) = (\Sigma ep_i \cdot cos2F_i)/(n/2)$$

$$\text{Module(Ov)} = \sqrt{([\text{Sin(Ov)}]^2 + [\text{Cos(Ov)}]^2)} = Ep_{2F}$$

$$\text{Phase(Ov)} = \text{Atg}[\text{Sin(Ov)}/\text{Cos(Ov)}] = \varphi_{2F}$$

3. Calcul de la valeur moyenne de l'épaisseur :

$$Ep_{moy} = (\Sigma\ ep_i)/n$$

4. Calcul de la courbe d'épaisseur interpolée :

$$Ep = [Ep_F\ .\ \sin(2\pi t + \varphi_F)] + [Ep_{2F}\ .\ \sin(4\pi t + \varphi_{2F})] + Ep_{moy}$$

Avec : t = période d'échantillonnage de la courbe interpolée

II- <u>Diamètre externe</u>

Le principe est le même mais s'applique cette fois sur les échantillons $\varnothing_i$ avec la période $4\pi$ puisque nous ne recherchons pas d'excentration, ce qui conduit, avec n = nombre d'échantillons $\varnothing_I$ à :

$$\text{Sin(OV}_{ext}) = (\Sigma\varnothing_I\ .\ \sin2F_i)/(n/2)$$

$$\text{Cos(OV}_{ext}) = (\Sigma\varnothing_I\ .\ \cos2F_i)/(n/2)$$

$$\text{Module(OV}_{ext}) = \sqrt{([\text{Sin(OV}_{ext})]^2 + [\text{Cos(OV}_{ext})]^2)} = \varnothing Ext_{2F}$$

$$\text{Phase(OV}_{ext}) = \text{Atg}[\text{Sin(OV}_{ext})]/\text{Cos(OV}_{ext})] = \varphi Ext_{2F}$$

$$\varnothing_{moy} = (\Sigma\varnothing_i)/n$$

$$\varnothing ext = [\varnothing Ext_{2F}\ .\ \sin(4\pi t) + \varphi Ext_{2F})] + \varnothing_{moy}$$

Avec : t = période d'échantillonnage de la courbe interpolée

III- <u>Ovalisation interne</u>

Le procédé permet également d'extraire l'ovalisation du diamètre interne ce qui n'est pas possible directement à partir de la courbe d'épaisseur car celle-ci restitue la somme vectorielle des ovalisations internes et externes.

Pour ce faire, il suffit de soustraire aux échantillons $ep_i$, les échantillons $\varnothing_i$ correspondants diminués de $\varnothing_{moy}$, ce qui revient à enlever la part d'ovalisation externe à l'épaisseur.

$$Eplnt_i = ep_i - (\varnothing_i - \varnothing_{moy})$$

Le calcul est ensuite le même que pour le diamètre externe, mais avec les échantillons $Eplnt_i$ ce qui conduit, avec n = nombre d'échantillons $Eplnt_i$ à :

$$Sin(O_{vint}) = (\Sigma Eplnt_i . sin2F_i)/(n/2)$$

$$Cos(O_{vint}) = (\Sigma Eplnt_I . cos2F_i)/(n/2)$$

$$Module(Ov_{int}) = \sqrt{([Sin(Ov_{int})]^2 + (Cos(Ov_{int}))^2)} = \varnothing Int_{2F}$$

$$Phase(O_{vint}) = Atg[Sin(Ov_{int})/Cos(Ov_{int})] = \varphi Int_{2F}$$

Connaissant le module et la phase de l'ovalisation, celle-ci est entièrement déterminée.

Le dispositif selon l'invention décrit ci-dessus permet d'obtenir les principaux avantages suivants :

- une augmentation considérable des vitesses de contrôle qui peut théoriquement atteindre un facteur 100 ; la limite est en fait imposée par la vitesse maximale de translation des tubes autorisée par le convoyeur ;
- le coût du dispositif est, quant à lui, réduit dans des proportions importantes car il est possible d'économiser le coût du moyen de mise en rotation dans le cas de systèmes rotatifs et de réduire le nombre de voies de contrôle d'un facteur qui peut atteindre plusieurs dizaines, voire centaines, par rapport au cas de sondes encerclantes ;
- le dispositif s'applique à tous les types de tubes, de faibles et de fortes dimensions, car, d'une part le nombre de sondes nécessaires ne dépend pas du diamètre du tube à contrôler, et d'autre part les sondes peuvent être installées dans une seule "boîte à eau" comme décrit ci-dessus pour le contrôle des tubes de faibles dimensions, ou dans des "boîtes à eau" individuelles dans le cas de tubes de fortes dimensions ;
- comme indiqué plus haut, le réglage de positionnement des sondes n'est absolument pas critique pour le procédé lui-même ; les sondes doivent seulement être réglées, comme dans tous systèmes de contrôle par ultrasons, pour obtenir des échos de mesure corrects ; ces réglages peuvent, par ailleurs, se faire très facilement puisque les sondes sont statiques et indépendantes ; et
- le dispositif permet, de par son principe d'analyse spectral, de séparer et d'identifier directement les valeurs d'excentration et d'ovalisation avec leurs phases respectives, ce qui permet de reconstruire le profil exact du tube pour chaque section mesurée.

Ce dispositif s'applique en premier lieu, mais non exclusivement, au contrôle dimensionnel par ultrasons des tubes et des barres.

Le dispositif s'applique également au contrôle dimensionnel des tubes et des barres par tout autre moyen de mesure que les ultrasons, par exemple par des moyens optiques, par des rayons-X, etc.

Le dispositif s'applique d'une manière générale au contrôle dimensionnel de tous produits de forme continue sans variation abrupte effectuée par tous moyens de mesure dimensionnelle.

## Revendications

1. Dispositif de caractérisation dimensionnelle d'un objet (8) comportant une surface sensiblement cylindrique de révolution autour d'un axe longitudinal (14), tel qu'une barre ou un tube, comprenant :

   - au moins un émetteur (Si) pour émettre au moins deux ondes impulsionnelles, dans un milieu (3) adapté pour propager ces ondes, chacune respectivement vers un point de mesure (Pi) distinct de la surface cylindrique,

- au moins un récepteur (Si) pour recueillir les ondes impulsionnelles réfléchies, par la surface cylindrique, au niveau de chacun des points de mesure (Pi),
- des premiers moyens de calcul (22) de la position de chacun des points de mesure (Pi), à partir du temps de vol des ondes impulsionnelles sur un trajet comprenant un aller entre chaque émetteur (Si) et le point de mesure (Pi) correspondant et un retour entre ce point de mesure (Pi) et un récepteur (Si), et

des seconds moyens de calcul (24) d'une courbe caractéristique de la surface cylindrique, sur 360 degrés autour de l'axe longitudinal (14) et passant par chacun des points de mesure (Pi), par interpolation à partir de la position correspondante de chacun de ces points (Pi),

**caractérisé par le fait que** la courbe caractéristique correspondant :

a) soit à une courbe d'épaisseur donnée par :

$$\text{Ep} = [\text{Ep}_F \ . \ \sin(2\pi t + \varphi_F)] + [\text{Ep}_{2F} \ . \ \sin(4\pi t + \varphi_{2F})] + \text{Ep}_{moy}$$

où

-- $\text{Ep}_F$ est l'amplitude de la variation de l'épaisseur calculée pour une excentration de l'objet par rapport à l'axe longitudinal,
-- $\varphi_F$ est la phase de la variation de l'épaisseur calculée pour une excentration de l'objet par rapport à l'axe longitudinal,
-- $\text{Ep}_{2F}$ est l'amplitude de la variation de l'épaisseur calculée pour une ovalisation de l'objet,
-- $\varphi_{2F}$ est la phase de la variation de l'épaisseur calculée pour une ovalisation de l'objet,
-- $\text{Ep}_{moy}$ est la valeur moyenne de l'épaisseur calculée sur l'ensemble des points de mesure,
-- t est la période d'échantillonnage de la courbe interpolée,

b) soit au diamètre externe et est donnée par :

$$\varnothing_{ext} = [\varnothing\text{Ext}_{2F} \ . \ \sin(4\pi t + \varphi\text{Ext}_{2F})] + \varnothing_{moy}$$

où

-- $\varnothing\text{Ext}_{2F}$ est l'amplitude de la variation calculée pour le diamètre externe de l'objet,
-- $\varphi\text{Ext}_{2F}$ est la phase de la variation calculée pour le diamètre externe de l'objet,
-- $\varnothing_{moy}$ est la valeur moyenne du diamètre calculé sur l'ensemble des points de mesure,
-- t est la période d'échantillonnage de la courbe interpolée,

c) soit à l'amplitude et à la phase de l'ovalisation du diamètre interne et est donnée par :

$$\text{Module}(\text{Ov}_{int}) = \sqrt{([\text{Sin}(\text{Ov}_{int})]^2 + (\text{Cos}(\text{Ov}_{int}))^2)} = \varnothing\text{Int}_{2F}$$

$$\text{Phase}(\text{Ov}_{int}) = \text{Atg}[\text{Sin}(\text{Ov}_{int})/\text{Cos}(\text{Ov}_{int})] = \varphi\text{Int}_{2F}$$

où

$$\text{Sin}(\text{Ov}_{int}) = (\Sigma\text{EpInt}_i \ . \ \sin 2F_i)/(n/2)$$

$$Cos(Ov_{int}) = (\Sigma Eplnt_i \cdot cos2F_i)/(n/2)$$

avec :

-- $Eplnt_i = ep_i-(\varnothing_i- \varnothing_{moy})$,
-- $\varnothing_{moy}$ : la valeur moyenne du diamètre calculé sur l'ensemble des points de mesure,
-- $\varnothing_i$ : est une valeur d'échantillonnage du diamètre externe,
-- $2F_i$ est la fréquence d'ovalisation,
-- n égal au nombre de points de mesure.

2. Dispositif selon la revendication 1, dans lequel chaque émetteur (Si) et chaque récepteur (Si) sont fixes par rapport à l'objet qui lui se déplace sensiblement parallèlement à l'axe longitudinal (14).

3. Dispositif selon l'une des revendications précédentes, dans lequel chaque émetteur (Si) est également récepteur.

4. Dispositif selon la revendication précédente, comportant au moins quatre points de mesure (Pi) de préférence six points de mesure (Pi).

5. Dispositif selon l'une des revendications précédentes, comportant au moins quatre émetteurs (Si) et quatre récepteurs, répartis autour de l'objet (8), de manière sensiblement symétrique autour de l'axe longitudinal (14), pour déterminer la position d'au moins quatre points de mesure (Pi).

6. Procédé de caractérisation dimensionnelle d'un objet (8) comportant une surface sensiblement cylindrique de révolution autour d'un axe longitudinal (14), tel qu'une barre ou un tube, comprenant :

- l'émission d'au moins deux ondes impulsionnelles, dans un milieu (3) adapté pour propager ces ondes, chacune respectivement vers un point de mesure (Pi) distinct de la surface cylindrique,
- la détection d'ondes impulsionnelles réfléchies, par la surface cylindrique, au niveau de chacun des points de mesure (Pi),
- le calcul de la position de chacun des points de mesure (Pi), à partir du temps de vol des ondes impulsionnelles sur un trajet comprenant un aller entre chaque émetteur (Si) et le point de mesure (Pi) correspondant et un retour entre ce point de mesure (Pi) et un récepteur (Si), et Le calcul d'une courbe caractéristique de la surface cylindrique, sur 360 degrés autour de l'axe longitudinal (14) et passant par chacun des points de mesure (Pi), par interpolation à partir de la position correspondante de chacun de ces points (Pi), **caractérisé par le fait que** la courbe caractéristique correspondant :

a) soit à une courbe d'épaisseur donnée par :

$$Ep = [Ep_F \cdot sin(2\pi t+\varphi_F)] + [Ep_{2F} \cdot sin(4\pi t+\varphi_{2F})] + Ep_{moy}$$

où

-- $Ep_F$ est l'amplitude de la variation de l'épaisseur calculée pour une excentration de l'objet par rapport à l'axe longitudinal,
-- $\varphi_F$ est la phase de la variation de l'épaisseur calculée pour une excentration de l'objet par rapport à l'axe longitudinal,
-- $Ep_{2F}$ est l'amplitude de la variation de l'épaisseur calculée pour une ovalisation de l'objet,
-- $\varphi_{2F}$ est la phase de la variation de l'épaisseur calculée pour une ovalisation de l'objet,
-- $Ep_{moy}$ est la valeur moyenne de l'épaisseur calculée sur l'ensemble des points de mesure,
-- t est la période d'échantillonnage de la courbe interpolée,

b) soit au diamètre externe et est donnée par :

$$\varnothing_{ext} = [\varnothing Ext_{2F} \cdot \sin(4\pi t + \varphi Ext_{2F})] + \varnothing_{moy}$$

où

-- $\varnothing Ext_{2F}$ est l'amplitude de la variation calculée pour le diamètre externe de l'objet,
-- $\varphi Ext_{2F}$ est la phase de la variation calculée pour le diamètre externe de l'objet,
-- $\varnothing_{moy}$ est la valeur moyenne du diamètre calculé sur l'ensemble des points de mesure,
-- t est la période d'échantillonnage de la courbe interpolée,

c) soit à l'amplitude et à la phase de l'ovalisation du diamètre interne et est donnée par :

$$\text{Module}(Ov_{int}) = \sqrt{([\text{Sin}(Ov_{int})]^2 + (\text{Cos}(Ov_{int})]^2)} = \varnothing Int_{2F}$$

$$\text{Phase}(Ov_{int}) = \text{Atg}[\text{Sin}(Ov_{int})/\text{Cos}(Ov_{int})] = \varphi Int_{2F}$$

où

$$\text{Sin}(Ov_{int}) = (\Sigma Eplnt_i \cdot \sin 2F_i)/(n/2)$$

$$\text{Cos}(Ov_{int}) = (\Sigma Eplnt_i \cdot \cos 2F_i)/(n/2)$$

avec :

-- $Eplnt_i$ = epi- $(\varnothing_i - \varnothing_{moy})$,
-- $\varnothing_{moy}$ : la valeur moyenne du diamètre calculé sur l'ensemble des points de mesure,
-- $\varnothing_i$ : est une valeur d'échantillonnage du diamètre externe,
-- $2F_i$ est la fréquence d'ovalisation,
-- n égal au nombre de points de mesure.

**7.** Procédé selon la revendication 6, dans lequel on déplace l'objet (8) sensiblement parallèlement à l'axe longitudinal (14).

**8.** Procédé selon l'une des revendications 6 et 7, dans lequel la courbe caractéristique est calculée à partir de la position d'au moins quatre points de mesure (Pi).

**9.** Procédé selon l'une des revendications 6 à 8, dans lequel l'émission des ondes impulsionnelles est simultanée à partir d'un ensemble d'émetteurs sensiblement également répartis angulairement autour de l'axe longitudinal (14).

**10.** Procédé selon l'une des revendications 6 à 8, dans lequel l'émission des ondes impulsionnelles est réalisée séquentiellement sur un ensemble d'émetteurs (Si) sensiblement également répartis angulairement autour de l'axe longitudinal (14).

**11.** Programme d'ordinateur pour la mise en oeuvre, lorsque ce programme est exécuté sur un ordinateur, d'un procédé de caractérisation dimensionnelle d'un objet (8) comportant une surface sensiblement cylindrique de révolution autour d'un axe longitudinal (14), tel qu'une barre ou un tube, ce programme comprenant les instructions pour

- déclencher l'émission d'au moins deux ondes impulsionnelles par au moins un émetteur (Si),
- calculer de manière synchronisée par rapport à l'émission des ondes impulsionnelles, la position d'au moins deux points de mesure (Pi), à partir de données recueillies par au moins un récepteur et correspondant à une onde impulsionnelle réfléchie par la surface cylindrique et

- calculer une courbe caractéristique de la surface cylindrique, sur 360 degrés autour de l'axe longitudinal (14) et passant par chacun des points de mesure (Pi), par interpolation à partir de la position correspondante de chacun de ces points (Pi),

**caractérisé par le fait que** la courbe caractéristique correspondant :

a) soit à une courbe d'épaisseur donnée par :

$$\mathtt{Ep \ = \ [Ep_F \ . \ sin(2\pi t + \varphi_F)] \ + \ [Ep_{2F} \ . \ sin(4\pi t + \varphi_{2F})] \ + \ Ep_{moy}}$$

où

-- $Ep_F$ est l'amplitude de la variation de l'épaisseur calculée pour une excentration de l'objet par rapport à l'axe longitudinal,
-- $\varphi_F$ est la phase de la variation de l'épaisseur calculée pour une excentration de l'objet par rapport à l'axe longitudinal,
-- $Ep_{2F}$ est l'amplitude de la variation de l'épaisseur calculée pour une ovalisation de l'objet,
-- $\varphi_{2F}$ est la phase de la variation de l'épaisseur calculée pour une ovalisation de l'objet,
-- $Ep_{moy}$ est la valeur moyenne de l'épaisseur calculée sur l'ensemble des points de mesure,
-- t est la période d'échantillonnage de la courbe interpolée,

b) soit au diamètre externe et est donnée par :

$$\mathtt{\varnothing_{ext} \ = \ [\varnothing Ext_{2F} \ . \ sin(4\pi t + \varphi Ext_{2F})] \ + \ \varnothing_{moy}}$$

où

-- $\varnothing Ext_{2F}$ est l'amplitude de la variation calculée pour le diamètre externe de l'objet,
-- $\varphi Ext_{2F}$ est la phase de la variation calculée pour le diamètre externe de l'objet,
-- $\varnothing_{moy}$ est la valeur moyenne du diamètre calculé sur l'ensemble des points de mesure,
-- t est la période d'échantillonnage de la courbe interpolée,

c) soit à l'amplitude et à la phase de l'ovalisation du diamètre interne et est donnée par :

$$\mathtt{Module(Ov_{int}) \ = \ \sqrt{([Sin(Ov_{int})]^2 \ + \ (Cos(Ov_{int})]^2)} \ = \ \varnothing Int_{2F}}$$

$$\mathtt{Phase(Ov_{int}) \ = \ Atg[Sin(Ov_{int})/Cos(Ov_{int})] \ = \ \varphi Int_{2F}}$$

où

$$\mathtt{Sin(Ov_{int}) \ = \ (\Sigma Eplnt_i \ . \ sin2F_i)/(n/2)}$$

$$\mathtt{Cos(Ov_{int}) \ = \ (\Sigma Eplnt_i \ . \ cos2F_i)/(n/2)}$$

avec :

-- EpInt$_i$ = ep$_i$-($\varnothing_i$-$\varnothing_{moy}$),

-- $\varnothing_{moy}$ : = la valeur moyenne du diamètre calculé sur l'ensemble des points de mesure,

-- $\varnothing_i$ : est une valeur d'échantillonnage du diamètre externe,

-- 2F$_i$ est la fréquence d'ovalisation,

-- n égal au nombre de points de mesure.

**12.** Programme selon la revendication 11, dans lequel la courbe caractéristique est calculée à partir de la position d'au moins quatre points de mesure (Pi).

**Claims**

**1.** A device for dimensionally characterizing an object (8) comprising a surface roughly cylindrical of revolution about a longitudinal axis (14), such as a bar or a tube, comprising:

- at least one emitter (Si) for emitting at least two pulsed waves, in a medium (3) suitable for propagating these waves, each respectively to a separate measuring point (Pi) of the cylindrical surface,
- at least one receiver (Si) for collecting the pulsed waves reflected, by the cylindrical surface, at each of the measuring points (Pi),
- first means (22) of calculating the position of each of the measuring points (Pi), based on the travel time of the pulsed waves over a path comprising a forward section between each emitter (Si) and the corresponding measuring point (Pi) and a return section between this measuring point (Pi) and a receiver (Si), and
- second means (24) of calculating a curve characteristic of the cylindrical surface, over 360° about the longitudinal axis (14) and passing through each of the measuring points (Pi), by interpolation from the corresponding position of each of these points (Pi),

**characterized in that** the. characteristic curve corresponds to:

a) either a thickness curve given by:

$$\mathrm{Ep} = [\mathrm{Ep_F} \, . \, \sin(2\pi t+\varphi_F)] + [\mathrm{Ep_{2F}} \, . \, \sin(4\pi t+\varphi_{2F})] + \mathrm{Ep_{moy}}$$

where

-- Ep$_F$ is the amplitude of the variation of the thickness calculated for an excentration of the object relative to the longitudinal axis,

-- $\varphi_F$ is the phase of the variation of the thickness calculated for an excentration of the object relative to the longitudinal axis,

-- Ep$_{2F}$ is the amplitude of the variation of the thickness calculated for an ovalization of the object,

-- $\varphi_{2F}$ is the phase of the variation of the thickness calculated for an ovalization of the object,

-- Ep$_{moy}$ is the average value of the thickness calculated over all the measuring points,

-- t is the sampling period of the interpolated curve,

b) or the external diameter and is given by:

$$\varnothing_{ext} = [\varnothing\mathrm{Ext}_{2F} \, . \, \sin(4\pi t+\varphi\mathrm{Ext}_{2F})] + \varnothing_{moy}$$

where

-- $\varnothing$Ext$_{2F}$ is the amplitude of the variation calculated for the external diameter of the object,

-- $\varphi$Ext$_{2F}$ is the phase of the variation calculated for the external diameter of the object,

-- $\varnothing_{moy}$ is the average value of the diameter calculated over all the measuring points,

-- t is the sampling period of the interpolated curve,

c) or the amplitude and the phase of the ovalization of the internal diameter and is given by:

$$\mathrm{Modul(Ov_{int})} = \sqrt{([\mathrm{Sin(Ov_{int})}]^2 + (\mathrm{Cos(Ov_{int})})^2)} = \varnothing\mathrm{Int_{2F}}$$

$$\mathrm{Phase(Ov_{int})} = \mathrm{Atg[Sin(Ov_{int})/Cos(Ov_{int})]} = \varphi\mathrm{Int_{2F}}$$

where

$$\mathrm{Sin(Ov_{int})} = (\Sigma\mathrm{Eplnt_i} \cdot \mathrm{sin2F_i})/(n/2)$$

$$\mathrm{Cos(Ov_{int})} = (\Sigma\mathrm{Eplnt_i} \cdot \mathrm{cos2F_i})/(n/2)$$

with:

-- $\mathrm{Eplnti} = ep_i - (\varnothing_i - \varnothing_{moy})$,
-- $\varnothing_{moy}$: the average value of the diameter calculated over all the measuring points,
-- $\varnothing_i$: is a sampling value of the external diameter,
-- $2F_i$ is the ovalization frequency,
-- n equals the number of measuring points.

2. The device as claimed in claim 1, wherein each emitter (Si) and each receiver (Si) is fixed relative to the object which is moved roughly parallel to the longitudinal axis (14).

3. The device as claimed in one of the preceding claims, wherein each emitter (Si) is also a receiver.

4. The device as claimed in the preceding claim, comprising at least four measuring points (Pi), preferably six measuring points (Pi).

5. The device as claimed in one of the preceding claims, comprising at least four emitters (Si) and four receivers, distributed about the object (8) roughly symmetrically about the longitudinal axis (14), to determine the position of at least four measuring points (Pi).

6. A method for dimensionally characterizing an object (8) comprising a surface roughly cylindrical of revolution about a longitudinal axis (14), such as a bar or a tube, comprising:

- the emission of at least two pulsed waves, in a medium (3) suitable for propagating these waves, each respectively to a separate measuring point (Pi) of the cylindrical surface,
- the detection of pulsed waves reflected, by the cylindrical surface, at each of the measuring points (Pi),
- the calculation of the position of each of the measuring points (Pi), from the travel time of the pulsed waves over a path comprising a forward section between each emitter (Si) and the corresponding measuring point (Pi) and a return section between this measuring point (Pi) and a receiver (Si), and
the calculation of a curve characteristic of the cylindrical surface, over 360° about the longitudinal axis (14) and passing through each of the measuring points (Pi), by interpolation from the corresponding position of each of these points (Pi),

**characterized in that** the. characteristic curve corresponds to:

a) either a thickness curve given by:

$$\mathrm{Ep} = [\mathrm{Ep_F} \cdot \sin(2\pi t + \varphi_F)] + [\mathrm{Ep_{2F}} \cdot \sin(4\pi t + \varphi_{2F})] + \mathrm{Ep_{moy}}$$

where

-- $Ep_F$ is the amplitude of the variation of the thickness calculated for an excentration of the object relative to the longitudinal axis,

-- $\varphi_F$ is the phase of the variation of the thickness calculated for an excentration of the object relative to the longitudinal axis,

-- $Ep_{2F}$ is the amplitude of the variation of the thickness calculated for an ovalization of the object,

-- $\varphi_{2F}$ is the phase of the variation of the thickness calculated for an ovalization of the object,

-- $Ep_{moy}$ is the average value of the thickness calculated over all the measuring points,

-- t is the sampling period of the interpolated curve,

b) or the external diameter and is given by:

$$\emptyset_{ext} = [\emptyset Ext_{2F} \cdot \sin(4\pi t + \varphi Ext_{2F})] + \emptyset_{moy}$$

where

-- $\emptyset Ext_{2F}$ is the amplitude of the variation calculated for the external diameter of the object,

-- $\emptyset Ext_{2F}$ is the phase of the variation calculated for the external diameter of the object,

-- $\emptyset_{moy}$ is the average value of the diameter calculated over all the measuring points,

-- t is the sampling period of the interpolated curve,

c) or the amplitude and the phase of the ovalization of the internal diameter and is given by:

$$Modul(Ov_{int}) = \sqrt{([Sin(Ov_{int})]^2 + (Cos(Ov_{int})]^2)} = \emptyset Int_{2F}$$

$$Phase(Ov_{int}) = Atg[Sin(Ov_{int})/Cos(Ov_{int})] = \varphi Int_{2F}$$

where

$$Sin(Ov_{int}) = (\textstyle\sum EpInt_i \cdot \sin 2F_i)/(n/2)$$

$$Cos(Ov_{int}) = (\textstyle\sum EpInt_i \cdot \cos 2F_i)/(n/2)$$

with:

-- $EpInt_i = Ep_i - (\emptyset_i - \emptyset_{moy})$,

-- $\emptyset_{moy}$: the average value of the diameter calculated over all the measuring points,

-- $\emptyset_i$: is a sampling value of the external diameter,

-- $2F_i$ is the ovalization frequency,

-- n equals the number of measuring points.

7. The method as claimed in claim 6, wherein the object (8) is moved roughly parallel to the longitudinal axis (14).

8. The method as claimed in one of claims 6 and 7, wherein the characteristic curve is calculated from the position of at least four measuring points (Pi).

9. The method as claimed in one of claims 6 to 8, wherein the emission of the pulsed waves is simultaneous from a set of emitters distributed at roughly equal angles about the longitudinal axis (14).

10. The method as claimed in one of claims 6 to 8, wherein the emission of the pulsed waves is performed sequentially over a set of emitters (Si) also distributed at roughly equal angles about the longitudinal axis (14).

11. A computer program for implementing, when this program is run on a computer, a method for dimensionally characterizing an object (8) comprising a surface roughly cylindrical of revolution about a longitudinal axis (14), such as a bar or tube, this program comprising instructions for:

- triggering the emission of at least two pulsed waves by at least one emitter (Si),
- calculating, synchronously relative to the emission of the pulsed waves, the position of at least two measuring points (Pi), from data collected by at least one receiver and corresponding to a pulsed wave reflected by the cylindrical surface, and
- calculating a curve characteristic of the cylindrical surface, over 360° about the longitudinal axis (14) and passing through each of the measuring points (Pi), by interpolation from the corresponding position of each of these points (Pi),

**characterized in that** the. characteristic curve corresponds to:

a) either a thickness curve given by:

$$\mathrm{Ep} \; = \; [\mathrm{Ep_F} \; . \; \sin(2\pi t + \varphi_F)] \; + \; [\mathrm{Ep_{2F}} \; . \; \sin(4\pi t + \varphi_{2F})] \; + \; \mathrm{Ep_{moy}}$$

where

-- $\mathrm{Ep_F}$ is the amplitude of the variation of the thickness calculated for an excentration of the object relative to the longitudinal axis,
-- $\varphi_F$ is the phase of the variation of the thickness calculated for an excentration of the object relative to the longitudinal axis,
-- $\mathrm{Ep_{2F}}$ is the amplitude of the variation of the thickness calculated for an ovalization of the object,
-- $\varphi_{2F}$ is the phase of the variation of the thickness calculated for an ovalization of the object,
-- $\mathrm{Ep_{moy}}$ is the average value of the thickness calculated over all the measuring points,
-- t is the sampling period of the interpolated curve,

b) or the external diameter and is given by:

$$\varnothing_{\mathrm{ext}} \; = \; [\varnothing \mathrm{Ext_{2F}} \; . \; \sin(4\pi t + \varphi \mathrm{Ext_{2F}})] \; + \; \varnothing_{\mathrm{moy}}$$

where

-- $\varnothing\mathrm{Ext_{2F}}$ is the amplitude of the variation calculated for the external diameter of the object,
-- $\varphi\mathrm{Ext_{2F}}$ is the phase of the variation calculated for the external diameter of the object,
-- $\varnothing_{\mathrm{moy}}$ is the average value of the diameter calculated over all the measuring points,
-- t is the sampling period of the interpolated curve,

c) or the amplitude and the phase of the ovalization of the internal diameter, and is given by:

$$\mathrm{Modul}(\mathrm{Ov_{int}}) \; = \; \sqrt{([\mathrm{Sin}(\mathrm{Ov_{int}})]^2 \; + \; (\mathrm{Cos}(\mathrm{Ov_{int}})]^2)} \; = \; \varnothing \mathrm{Int_{2F}}$$

$$\mathrm{Phase}(\mathrm{Ov_{int}}) \; = \; \mathrm{Atg}[\mathrm{Sin}(\mathrm{Ov_{int}})/\mathrm{Cos}(\mathrm{Ov_{int}})] \; = \; \varphi \mathrm{Int_{2F}}$$

where

$$\mathrm{Sin}(\mathrm{Ov_{int}}) \; = \; (\Sigma \mathrm{Eplnt_i} \; . \; \sin 2F_i)/(n/2)$$

$$\mathrm{Cos(Ov_{int})} = (\textstyle\sum \mathrm{EpInt_i} \; . \; \mathrm{cos2F_i})/(n/2)$$

with:

-- $\mathrm{EpInti} = \mathrm{ep_i} - (\varnothing_i - \varnothing_{moy})$,
-- $\varnothing_{moy}$: is the average value of the diameter calculated over all the measuring points,
-- $\varnothing_i$: is a sampling value of the external diameter,
-- $2F_i$ is the ovalization frequency,
-- n equals the number of measuring points.

**12.** The program as claimed in claim 11, wherein the characteristic curve is calculated from the position of at least four measuring points (Pi).

**Patentansprüche**

**1.** Vorrichtung zur Dimensionscharakterisierung eines Objekts (8) mit einer im Wesentlichen zylindrischen Oberfläche, die um eine Längsachse (14) rotationssymmetrisch ist, etwa eine Stange oder ein Rohr, die aufweist:

- mindestens einen Sender (Si) zum Senden von mindestens zwei Impulswellen in ein Medium (3), das zum Ausbreiten jeder dieser Wellen jeweils zu einem unterschiedlichen Messpunkt (Pi) der zylindrischen Oberfläche geeignet ist,
- mindestens einen Empfänger (Si) zum Empfangen der durch die zylindrische Oberfläche auf der Höhe von jedem der Messpunkte (Pi) reflektierten Impulswellen,
- erste Mittel (22) zum Berechnen der Position von jedem der Messpunkte (Pi) anhand der Laufzeit der Impulswellen auf einer Strecke mit einem Lauf zwischen jedem Sender (Si) und dem entsprechenden Messpunkt (Pi) und einem Rücklauf zwischen diesem Messpunkt (Pi) und einem Empfänger (Si), und
- zweite Mittel (24) zum Berechnen einer charakteristischen Kurve der zylindrischen Oberfläche auf 360 Grad um die Längsachse (14), die durch jeden der Messpunkte (Pi) verläuft, durch Interpolation anhand der entsprechenden Position von jedem dieser Punkte (Pi),

**dadurch gekennzeichnet, dass**
die charakteristische Kurve Folgendem entspricht:

a) entweder einer Kurve mit einer Dicke, die gegeben ist durch:

$$\mathrm{Ep} = [\mathrm{Ep_F} \cdot \sin(2\pi t + \varphi_F)] + [\mathrm{Ep_{2F}} \cdot \sin(4\pi t + \varphi_{2F})] + \mathrm{Ep_{moy}}$$

wobei

- $\mathrm{Ep_F}$ die Amplitude der Veränderung der Dicke ist, die für eine Exzentrizität des Objekts in Bezug auf die Längsachse berechnet wird,
- $\varphi_F$ die Phase der Veränderung der Dicke ist, die für eine Exzentrizität des Objekts in Bezug auf die Längsachse berechnet wird,
- $\mathrm{Ep_{2F}}$ die Amplitude der Veränderung der Dicke ist, die für eine Unrundheit des Objekts berechnet wird,
- $\varphi_{2F}$ die Phase der Veränderung der Dicke ist, die für eine Unrundheit des Objekts berechnet wird,
- $\mathrm{Ep_{moy}}$ der Mittelwert der Dicke ist, der über die Gesamtheit der Messpunkte berechnet wird,
- t die Abtastperiode der interpolierten Kurve ist,

b) oder dem Außendurchmesser, gegeben durch:

$$\varnothing_{ext} = [\varnothing \mathrm{Ext_{2F}} \; . \; \sin(4\pi t + \varphi \mathrm{Ext_{2F}})] + \varnothing_{moy}$$

wobei

- $\varnothing Ext_{2F}$ die Amplitude der Veränderung ist, die für den Außendurchmesser des Objekts berechnet wird,
- $\varphi Ext_{2F}$ die Phase der Veränderung ist, die für den Außendurchmesser des Objekts berechnet wird,
- $\varnothing_{moy}$ der Mittelwert des Durchmessers ist, der über die Gesamtheit der Messpunkte berechnet wird,
- t die Abtastperiode der interpolierten Kurve ist,

c) oder der Amplitude und der Phase der Unrundheit des Innendurchmessers, gegeben durch:

$$Modul(Ov_{int}) = \sqrt{([Sin(Ov_{int})]^2 + (Cos(Ov_{int})]^2)} = \varnothing Int_{2F}$$

$$Phase(Ov_{int}) = Atg[Sin(Ov_{int})/Cos(Ov_{int})] = \varphi Int_{2F}$$

wobei

$$Sin(Ov_{int}) = (\Sigma EpInt_i \, . \, sin2F_i)/(n/2)$$

$$Cos(Ov_{int}) = (\Sigma EpInt_i \, . \, cos2F_i)/(n/2)$$

mit:

- $EpInt_i = ep_i - (\varnothing_i - \varnothing_{moy})$,
- $\varnothing_{moy}$: der Mittelwert des Durchmessers, der über die Gesamtheit der Messpunkte berechnet wird,
- $\varnothing_i$: ist ein Abtastwert des Außendurchmessers,
- $2F_i$ ist die Unrundheitsfrequenz,
- n ist gleich der Anzahl von Messpunkten.

2. Vorrichtung nach Anspruch 1, wobei jeder Sender (Si) und jeder Empfänger (Si) in Bezug auf das Objekt fest sind, das sich im Wesentlichen parallel zur Längsachse (14) verschiebt.

3. Vorrichtung nach einem der vorangehenden Ansprüche, wobei jeder Sender (Si) auch ein Empfänger ist.

4. Vorrichtung nach dem vorangehenden Anspruch mit mindestens vier Messpunkten (Pi), vorzugsweise sechs Messpunkten (Pi).

5. Vorrichtung nach einem der vorangehenden Ansprüche mit mindestens vier Sendern (Si) und vier Empfängern, die um das Objekt (8) in im Wesentlichen symmetrischer Weise um die Längsachse (14) verteilt sind, um die Position von mindestens vier Messpunkten (Pi) zu bestimmen.

6. Verfahren zur Dimensionscharakterisierung eines Objekts (8) mit einer im Wesentlichen zylindrischen Oberfläche, die um eine Längsachse (14) rotationssymmetrisch ist, etwa eine Stange oder ein Rohr, das aufweist:

- Senden von mindestens zwei Impulswellen in ein Medium (3), das zum Ausbreiten jeder dieser Wellen jeweils zu einem unterschiedlichen Messpunkt (Pi) der zylindrischen Oberfläche geeignet ist,
- Detektieren von durch die zylindrische Oberfläche auf der Höhe von jedem der Messpunkte (Pi) reflektierten Impulswellen,
- Berechnen der Position von jedem der Messpunkte (Pi) anhand der Laufzeit der Impulswellen auf einer Strecke mit einem Lauf zwischen jedem Sender (Si) und dem entsprechenden Messpunkt (Pi) und einem Rücklauf zwischen diesem Messpunkt (Pi) und einem Empfänger (Si), und
- Berechnen einer charakteristischen Kurve der zylindrischen Oberfläche auf 360 Grad um die Längsachse (14), die durch jeden der Messpunkte (Pi) verläuft, durch Interpolation anhand der entsprechenden Position von jedem dieser Punkte (Pi),

**dadurch gekennzeichnet, dass**
die charakteristische Kurve Folgendem entspricht:

a) entweder einer Kurve mit einer Dicke, die gegeben ist durch:

$$Ep = [Ep_F \cdot \sin(2\pi t + \varphi_F)] + [Ep_{2F} \cdot \sin(4\pi t + \varphi_{2F})] + Ep_{moy}$$

wobei

- $Ep_F$ die Amplitude der Veränderung der Dicke ist, die für eine Exzentrizität des Objekts in Bezug auf die Längsachse berechnet wird,
- $\varphi_F$ die Phase der Veränderung der Dicke ist, die für eine Exzentrizität des Objekts in Bezug auf die Längsachse berechnet wird,
- $Ep_{2F}$ die Amplitude der Veränderung der Dicke ist, die für eine Unrundheit des Objekts berechnet wird,
- $\varphi_{2F}$ die Phase der Veränderung der Dicke ist, die für eine Unrundheit des Objekts berechnet wird,
- $Ep_{moy}$ der Mittelwert der Dicke ist, der über die Gesamtheit der Messpunkte berechnet wird,
- $t$ die Abtastperiode der interpolierten Kurve ist,

b) oder dem Außendurchmesser, gegeben durch:

$$\varnothing_{ext} = [\varnothing Ext_{2F} \cdot \sin(4\pi t + \varphi Ext_{2F})] + \varnothing_{moy}$$

wobei

- $\varnothing Ext_{2F}$ die Amplitude der Veränderung ist, die für den Außendurchmesser des Objekts berechnet wird,
- $\varphi Ext_{2F}$ die Phase der Veränderung ist, die für den Außendurchmesser des Objekts berechnet wird,
- $\varnothing_{moy}$ der Mittelwert des Durchmessers ist, der über die Gesamtheit der Messpunkte berechnet wird,
- $t$ die Abtastperiode der interpolierten Kurve ist,

c) oder der Amplitude und der Phase der Unrundheit des Innendurchmessers, gegeben durch:

$$Modul(Ov_{int}) = \sqrt{([Sin(Ov_{int})]^2 + (Cos(Ov_{int})]^2)} = \varnothing Int_{2F}$$

$$Phase(Ov_{int}) = Atg[Sin(Ov_{int})/Cos(Ov_{int})] = \varphi Int_{2F}$$

wobei

$$Sin(Ov_{int}) = (\Sigma EpInt_i \cdot \sin 2F_i)/(n/2)$$

$$Cos(Ov_{int}) = (\Sigma EpInt_i \cdot cos2F_i)/(n/2)$$

mit:

- $EpInt_i = ep_i - (\varnothing_i - \varnothing_{moy})$,
- $\varnothing_{moy}$: der Mittelwert des Durchmessers, der über die Gesamtheit der Messpunkte berechnet wird,
- $\varnothing_i$: ist ein Abtastwert des Außendurchmessers,
- $2F_i$ ist die Unrundheitsfrequenz,
- n ist gleich der Anzahl von Messpunkten.

7. Verfahren nach Anspruch 6, bei dem das Objekt (8) im Wesentlichen parallel zur Längsachse (14) verlagert wird.

8. Verfahren nach einem der Ansprüche 6 und 7, bei dem die charakteristische Kurve anhand der Position von mindestens vier Messpunkten (Pi) berechnet wird.

9. Verfahren nach einem der Ansprüche 6 bis 8, bei dem das Senden der Impulswellen ausgehend von einer Gesamtheit von Sendern, die im Wesentlichen gleich im Winkel um die Längsachse (14) verteilt sind, gleichzeitig stattfindet.

10. Verfahren nach einem der Ansprüche 6 bis 8, bei dem das Senden der Impulswellen nacheinander an einer Gesamtheit von Sendern (Si) ausgeführt wird, die im Wesentlichen gleich im Winkel um die Längsachse (14) verteilt sind.

11. Computerprogramm zur Ausführung, wenn dieses Programm auf einem Computer ausgeführt wird, eines Verfahrens zur Dimensionscharakterisierung eines Objekts (8) mit einer im Wesentlichen zylindrischen Oberfläche, die um eine Längsachse (14) rotationssymmetrisch ist, etwa eine Stange oder ein Rohr, wobei dieses Programm die Befehle aufweist, um

- das Senden von mindestens zwei Impulswellen durch mindestens einen Sender (Si) auszulösen,
- in synchronisierter Weise in Bezug auf das Senden der Impulswellen die Position von mindestens zwei Messpunkten (Pi) anhand von Daten zu berechnen, die durch mindestens einen Empfänger empfangen werden und einer durch die zylindrische Oberfläche reflektierten Impulswelle entsprechen, und
- eine charakteristische Kurve der zylindrischen Oberfläche auf 360 Grad um die Längsachse (14), die durch jeden der Messpunkte (Pi) verläuft, durch Interpolation anhand der entsprechenden Position von jedem dieser Punkte (Pi) zu berechnen,

**dadurch gekennzeichnet, dass**
die charakteristische Kurve Folgendem entspricht:

a) entweder einer Kurve mit einer Dicke, die gegeben ist durch:

$$Ep = [Ep_F \cdot sin(2\pi t + \varphi_F)] + [Ep_{2F} \cdot sin(4\pi t + \varphi_{2F})] + Ep_{moy}$$

wobei

- $Ep_F$ die Amplitude der Veränderung der Dicke ist, die für eine Exzentrizität des Objekts in Bezug auf die Längsachse berechnet wird,
- $\varphi_F$ die Phase der Veränderung der Dicke ist, die für eine Exzentrizität des Objekts in Bezug auf die Längsachse berechnet wird,
- $Ep_{2F}$ die Amplitude der Veränderung der Dicke ist, die für eine Unrundheit des Objekts berechnet wird,
- $\varphi_{2F}$ die Phase der Veränderung der Dicke ist, die für eine Unrundheit des Objekts berechnet wird,
- $Ep_{moy}$ der Mittelwert der Dicke ist, der über die Gesamtheit der Messpunkte berechnet wird,
- t die Abtastperiode der interpolierten Kurve ist,

b) oder dem Außendurchmesser, gegeben durch:

$$\varnothing_{ext} = [\varnothing Ext_{2F} \cdot \sin(4\pi t + \varphi Ext_{2F})] + \varnothing_{moy}$$

wobei

- $\varnothing Ext_{2F}$ die Amplitude der Veränderung ist, die für den Außendurchmesser des Objekts berechnet wird,
- $\varphi Ext_{2F}$ die Phase der Veränderung ist, die für den Außendurchmesser des Objekts berechnet wird,
- $\varnothing_{moy}$ der Mittelwert des Durchmessers ist, der über die Gesamtheit der Messpunkte berechnet wird,
- t die Abtastperiode der interpolierten Kurve ist,

c) oder der Amplitude und der Phase der Unrundheit des Innendurchmessers, gegeben durch:

$$\text{Modul}(Ov_{int}) = \sqrt{([\text{Sin}(Ov_{int})]^2 + (\text{Cos}(Ov_{int}))]^2)} = \varnothing Int_{2F}$$

$$\text{Phase}(Ov_{int}) = \text{Atg}[\text{Sin}(Ov_{int})/\text{Cos}(Ov_{int})] = \varphi Int_{2F}$$

wobei

$$\text{Sin}(Ov_{int}) = (\Sigma EpInt_i \cdot \sin 2F_i)/(n/2)$$

$$\text{Cos}(Ov_{int}) = (\Sigma EpInt_i \cdot \cos 2F_i)/(n/2)$$

mit:

- $EpInt_i = ep_i - (\varnothing_i - \varnothing_{moy})$,
- $\varnothing_{moy}$: der Mittelwert des Durchmessers, der über die Gesamtheit der Messpunkte berechnet wird,
- $\varnothing_i$: ist ein Abtastwert des Außendurchmessers,
- $2F_i$ ist die Unrundheitsfrequenz,
- n ist gleich der Anzahl von Messpunkten.

12. Programm nach Anspruch 11, wobei die charakteristische Kurve anhand der Position von mindestens vier Messpunkten (Pi) berechnet wird.

FIG.1.

3

FIG.3.

FIG.4.

FIG.5.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2234545
- US 6634233 B
- EP 0304054 A